# EUROPEAN PATENT SPECIFICATION

(11) **EP 3 339 721 B1**
(45) Date of publication and mention of the grant of the patent: **16.09.2020**
(21) Application number: 17170874.6
(22) Date of filing: 12.05.2017
(51) Int. Cl.: B60Q 1/30, F21S 43/249, F21S 43/237, F21S 43/50, F21S 45/50, F21S 43/14, F21W 103/35

(54) **LIGHT-GUIDED HIGH BRAKE LAMP FOR VEHICLE WITH BIDIRECTIONAL LIGHT**
LICHTLEITER OBERE BREMSLEUCHTE FÜR FAHRZEUGE MIT BIDIREKTIONALEM LICHT
FEU STOP SURÉLEVÉ POUR VÉHICULE COMPRENANT UN GUIDE DE LUMIÈRE À LUMIÈRE BIDIRECTIONNELLE

(30) Priority: 21.12.2016 CN 201621406057 U
(43) Date of publication of application: 27.06.2018
(73) Proprietor: Magna Mirrors (Taicang) Automotive Technology Co., Ltd., Jiangsu 215400 (CN)
(72) Inventor: MI, Zhenxing, Jiangsu 215400 (CN); WU, Anmin, Jiangsu 215400 (CN)
(74) Representative: Dummett Copp LLP

(56) References cited:
- EP-A1- 1 903 358
- EP-A1- 2 669 721
- EP-A2- 2 746 647
- US-A- 5 711 592
- US-A1- 2011 242 831
- US-A1- 2016 131 322

## Description

### FIELD OF THE INVENTION

The invention generally relates to the technical field of automobile parts, especially to the technical field of automobile high brake lamp, in particular to a light-guided high brake lamp for vehicle with bidirectional light.

### BACKGROUND OF THE INVENTION

At present, automobile high brake lamp is generally as direct LED light source type (designed to have the optical structure on the mask) currently on the market, using Fresnel lens and metal coating reflective. Because of its relatively simple appearance, which is easy to cause aesthetic fatigue, it is not easy for the driver of the rear vehicle to find that the front vehicle is braking, which is likely to cause rear-end accident.

### SUMMARY OF THE INVENTION

The aim of the invention is to overcome the deficiencies of the above-mentioned prior art, and to provide a light-guided high brake lamp for vehicle with bidirectional light which is capable of satisfying the requirements of the light distribution regulations and making the driver of rear moving vehicle to easily find the vehicle in front is braking.

In order to realize the above aims, this invention comprising:
said high brake lamp for vehicle comprising a mask and a housing, said mask being fixedly covered on said housing, a containing chamber provided between said mask and said housing, a light guide, at least two light sources and a circuit board assembly are provided in said containing chamber, said at least two light sources being located at two ends of the light guide to form opposing beam illuminating the light guide.

Preferably, two light sources are provided and are symmetrical with respect to the center of the light guide.

Preferably, said light guide is an elongated light guide linear or with radians, said light guide being provided with refractive stripes.

More preferably, the light guide has a circular cross section in a longitudinal direction.

More preferably, the light guide is an elongated light guide having a circular cross section in a longitudinal direction.

Preferably, the refractive stripes are successively raised from both ends to the middle of the light guide, and the refractive stripes are symmetrical with respect to the center of the light guide.

Preferably, the outer surface of said mask is provided with a watertight sealing joint strip.

According to the invention, the light guide cooperates with the housing through the snap fastener member.

According to the invention, the inner of housing is provided with a slot for securing the light source and the circuit board assembly.

Employing the light-guided high brake lamp for vehicle with bidirectional light according to this invention, when the brake pedal of the vehicle is stepped down, the light emitted by the light source forms a uniform strip of light through the refractive stripes on the light guide, so that the driver of vehicle moving behind can easily find the vehicle in front is stopping to prevent the rear-end accident, in order to meet the regulatory requirements about the high brake lamp and to enhance the appearance of the high brake lamp in the vehicle through emitting uniform striped light band.

### BRIEF DESCRIPTION OF THE DRAWINGS

FIG. 1 is a structural schematic diagram showing the overall structure of a light-guided high brake lamp for vehicle with bidirectional light according to the present invention.
FIG. 2 is an exploded view of a light-guided high brake lamp for vehicle with bidirectional light according to the present invention.

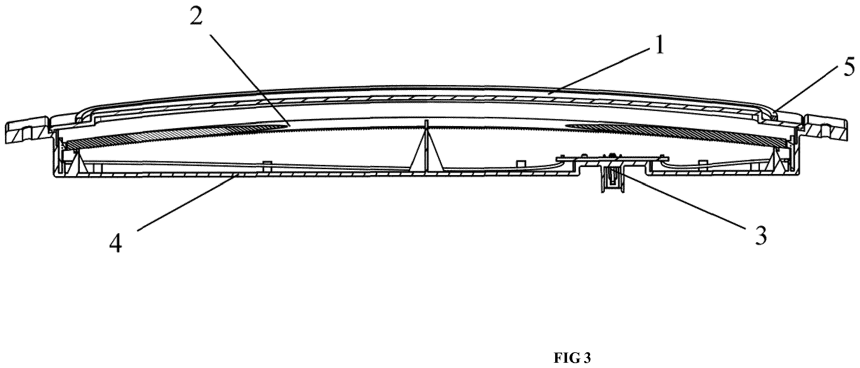

FIG. 3 is a cross-sectional view of a light-guided high brake lamp for vehicle with bidirectional light according to the present invention.

Illustrations sign:
- 1: mask
- 2: light guide
- 21: refractive stripes
- 3: circuit board assembly
- 31: first light source
- 32: second light source
- 4: housing
- 5: watertight sealing joint strip

### DETAILED DESCRIPTION OF THE INVENTION

In order to understand the technical content of the present invention clearly, the present invention is further exemplified by reference to the following example.

The light-guided high brake lamp for vehicle with bidirectional light according to the present invention comprising a mask and a housing, said mask being fixedly covered on said housing, a containing chamber provided between said mask and said housing, a light guide, at least two light sources and a circuit board assembly are provided in said containing chamber, said at least two light sources being located at two ends of the light guide to form opposing beam illuminating the light guide.

Wherein two light sources are provided and are symmetrical with respect to the center of the light guide; said light guide is an elongated light guide linear or with radians, said light guide being provided with refractive stripes; the light guide has a circular cross section in a longitudinal direction; the light guide is an elongated light guide having a circular cross section in a longitudinal direction; the refractive stripes are successively raised from both ends to the middle of the light guide, and the refractive stripes are symmetrical with respect to the center of the light guide; the outer surface of said mask is provided with a watertight sealing joint strip; the light guide cooperates with the housing through the snap fastener member; the inner of housing is provided with a slot for securing the light source and the circuit board assembly.

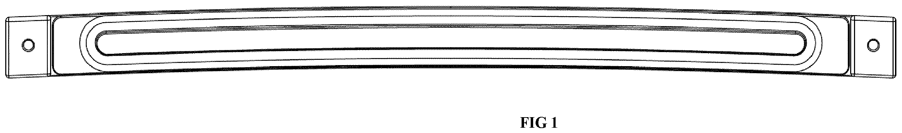

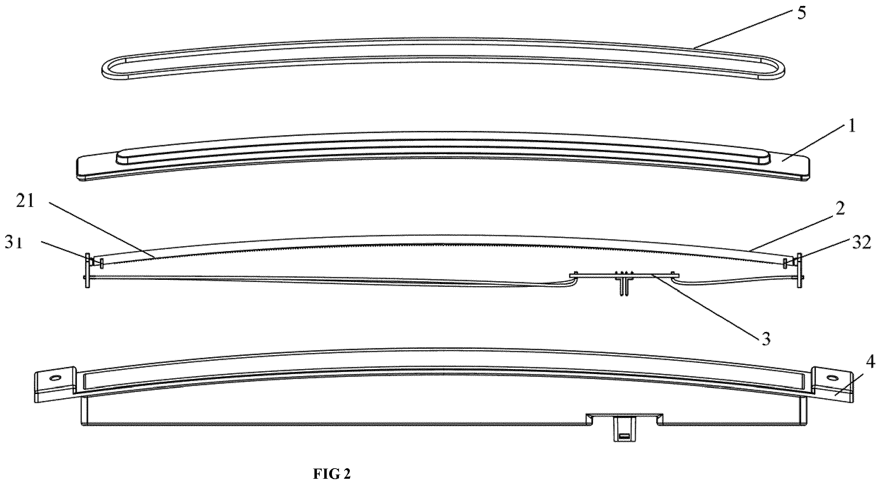

As shown in Fig. 1, the present invention provides an overall plan view of a light-guided high brake lamp for vehicle with bidirectional light, and as shown in Fig. 2, the present invention provides a light-guided high brake lamp for vehicle with bidirectional light including a mask 1, a light guide 2, a circuit board assembly 3, a housing 4, mask 1 being fixedly covered on said housing 4, a containing chamber provided between mask 1 and housing 4, said containing chamber being provided with a light guide 2 and a circuit board assembly 3. The first light source 31 and the second light source 32 emitting toward the circular light guide 2 are respectively located at two ends of the light guide 2, and emit simultaneously the opposite light to the circular light guide 2 through the refractive stripes 21 on the circular light guide to form a uniform strip light band.

In one embodiment according to the present invention, two light sources are provided on two sides of the light guide 2 and are symmetrical with respect to the center of the light guide 2.

In one embodiment according to the present invention, the refractive stripes 21 are successively raised from both ends to the middle of the light guide, and the refractive stripes are symmetrical with respect to the center of the light guide.

In one embodiment, mask 1 and housing 4 may be connected by welding, for example, by ultrasonic or vibration friction welding, or by other means such as cementing, screw connection or engagement with a concavo-convex structure.

In one embodiment provided by the invention, the light source and the circuit board assembly 3 are assembled to the housing 4 through a slot, by buckle or riveting.

According to the invention, the light guide 2 and the housing 4 are assembled by snap fastener member.

In one embodiment provided by the invention, the mask 1 is affixed with a watertight sealing joint strip 5.

Employing the light-guided high brake lamp for vehicle with bidirectional light according to this invention, when the brake pedal of the vehicle is stepped down, the light emitted by the light source forms a uniform strip of light through the refractive stripes on the light guide, so that the driver of vehicle moving behind can easily find the vehicle in front is stopping to prevent the rear-end accident, in order to meet the regulatory requirements about the high brake lamp and to enhance the appearance of the high brake lamp in the vehicle through emitting uniform striped light band.

In the present specification, the present invention has been described according to the particular embodiments. But it is obvious that these embodiments can be modified or changed without departure from the scope of the appended claims. Therefore, the specification described above is exemplary only and not intended to be limiting.

## Claims

1. A light-guided high brake lamp for a vehicle with bidirectional light comprising a mask (1) and a housing (4), said mask (1) being fixedly covered on said housing (4), a containing chamber provided between said mask (1) and said housing (4), a light guide (2); wherein at least two light sources (31, 32) and a circuit board assembly (3) are provided in said containing chamber, said at least two light sources (31,32) being located at two ends of the light guide to form opposing beams illuminating the light guide (2); **characterised in that** the inside of the housing (4) is provided with a slot for securing the light sources (31, 32) and the circuit board assembly (3); **wherein** the light guide (2) and the housing (4) are assembled by a snap fastener.

2. A light-guided high brake lamp for vehicle with bidirectional light as claimed in claim 1, wherein two light sources are provided and are symmetrical with respect to the center of the light guide.

3. A light-guided high brake lamp for vehicle with bidirectional light as claimed in claim 1, wherein said light guide is an elongated light guide linear or with radians, said light guide being provided with refractive stripes.

4. A light-guided high brake lamp for vehicle with bidirectional light as claimed in claim 3, the light guide has a circular cross section in a longitudinal direction.

5. A light-guided high brake lamp for vehicle with bidirectional light as claimed in claim 3, wherein the refractive stripes are successively raised from both ends to the middle of the light guide, and the refractive stripes are symmetrical with respect to the center of the light guide.

6. A light-guided high brake lamp for vehicle with bidirectional light as claimed in claim 1, wherein the outer surface of said mask is provided with a watertight sealing strip.

## Patentansprüche

1. Lichtgeführte hohe Bremsleuchte für ein Fahrzeug mit bidirektionalem Licht, umfassend: eine Maske (1) und ein Gehäuse (4), wobei die Maske (1) fest auf das Gehäuse (4) aufgesetzt ist; eine zwischen der Maske (1) und dem Gehäuse (4) vorgesehene Aufnahmekammer und einen Lichtleiter (2); wobei mindestens zwei Lichtquellen (31, 32) und eine Leiterplattenanordnung (3) in der Aufnahmekammer vorgesehen sind, die mindestens zwei Lichtquellen (31, 32) sind an den beiden Enden des Lichtleiters angeordnet, um gegenläufige Strahlen zu bilden, die den Lichtleiter (2) beleuchten;
**dadurch gekennzeichnet, dass** das Innere des Gehäuses (4) mit einem Schlitz zur Befestigung der Lichtquellen (31, 32) und der Leiterplattenanordnung (3) versehen ist, wobei der Lichtleiter (2) und das Gehäuse (4) mit einem Schnappverschluss zusammengebaut sind.

2. Lichtgeführte hohe Bremsleuchte für ein Fahrzeug mit bidirektionalem Licht nach Anspruch 1, wobei zwei Lichtquellen vorgesehen sind und zu der Mitte des Lichtleiters symmetrisch sind.

3. Lichtgeführte hohe Bremsleuchte für ein Fahrzeug mit bidirektionalem Licht nach Anspruch 1, wobei der Lichtleiter ein langgestreckter Lichtleiter ist, der geradlinig oder im Bogen verläuft, wobei der Lichtleiter mit lichtbrechenden Streifen versehen, ist.

4. Lichtgeführte hohe Bremsleuchte für ein Fahrzeug mit bidirektionalem Licht nach Anspruch 3, wobei der Lichtleiter in Längsrichtung einen kreisrunden Querschnitt hat.

5. Lichtgeführte hohe Bremsleuchte für ein Fahrzeug mit bidirektionalem Licht nach Anspruch 3, wobei die lichtbrechenden Streifen sukzessiv von beiden Enden zur Mitte des Lichtleiters angehoben werden, und wobei die lichtbrechenden Streifen zur Mitte des Lichtleiters symmetrisch sind.

6. Lichtgeführte hohe Bremsleuchte für ein Fahrzeug mit bidirektionalem Licht nach Anspruch 1, wobei die Außenseite der Maske mit einer wasserdichten Dichtungsband versehen ist.

## Revendications

1. Feu stop haut à lumière guidée, pour véhicule, avec lumière bidirectionnelle, comprenant un masque (1) et un boîtier (4), ledit masque (1) recouvrant de manière fixe ledit boîtier (4), une chambre de confinement disposée entre ledit masque (1) et ledit boîtier (4), et un guide de lumière (2) ;
au moins deux sources de lumière (31, 32) et un ensemble carte de circuits imprimés (3) étant disposés dans ladite chambre de confinement, lesdites au moins deux sources de lumière (31, 32) étant situées à deux extrémités du guide de lumière pour former des faisceaux opposés éclairant le guide de lumière (2) ;
**caractérisé par le fait que** l'intérieur du boîtier (4) comporte une fente pour fixer les sources de lumière (31, 32) et l'ensemble carte de circuits imprimés (3) ;
le guide de lumière (2) et le boîtier (4) étant assemblés par un élément de fixation à emboîtage élastique.

2. Feu stop haut à lumière guidée, pour véhicule, avec lumière bidirectionnelle selon la revendication 1, dans lequel deux sources de lumière sont prévues et sont symétriques par rapport au centre du guide de lumière.

3. Feu stop haut à lumière guidée, pour véhicule, avec lumière bidirectionnelle selon la revendication 1, dans lequel ledit guide de lumière est un guide de lumière allongé linéaire ou avec des radians, ledit guide de lumière comportant des bandes réfractrices.

4. Feu stop haut à lumière guidée, pour véhicule, avec lumière bidirectionnelle selon la revendication 3, le guide de lumière ayant une section transversale circulaire dans une direction longitudinale.

5. Feu stop haut à lumière guidée, pour véhicule, avec lumière bidirectionnelle selon la revendication 3, dans lequel les bandes réfractrices sont successivement surélevées à partir des deux extrémités jusqu'au milieu du guide de lumière, et les bandes réfractrices sont symétriques par rapport au centre du guide de lumière.

6. Feu stop haut à lumière guidée, pour véhicule, avec lumière bidirectionnelle selon la revendication 1, dans lequel la surface externe dudit masque comporte une bande d'étanchéité à l'eau.
